# EUROPEAN PATENT SPECIFICATION

(11) **EP 3 470 165 B1**
(45) Date of publication and mention of the grant of the patent: **16.08.2023**
(21) Application number: 17196467.9
(22) Date of filing: 13.10.2017
(51) Int. Cl.: B23K 26/146

(54) **APPARATUS FOR MACHINING A WORKPIECE WITH A LIQUID JET GUIDED LASER BEAM AND THE ASSEMBLY THEREOF**
VORRICHTUNG ZUR BEARBEITUNG EINES WERKSTÜCKS MIT EINEM FLÜSSIGKEITSSTRAHL GEFÜHRTEN LASERSTRAHL UND DER ZUSAMMENBAU DAVON
APPAREIL D'USINAGE D'UNE PIÈCE AU MOYEN D'UN FAISCEAU LASER GUIDÉ PAR UN JET LIQUIDE ET SON ASSEMBLAGE

(43) Date of publication of application: 17.04.2019
(73) Proprietor: SYNOVA S.A., 1266 Duillier (CH)
(72) Inventor: Espin, Loïc, 1006 Lausanne (CH); Diboine, Jérémie, 1007 Lausanne (CH); Diehl, Helgi, 1110 Morges (CH); Richerzhagen, Bernold, 1025 Saint-Sulpice (VD) (CH)
(74) Representative: Roth, Sebastian

(56) References cited:
- WO-A1-99/56907
- WO-A1-2006/122441
- JP-A- 2011 092 966
- JP-A- 2013 180 308
- US-A1- 2009 084 765

## Description

### TECHNICAL FIELD

The present invention relates to an apparatus for machining a workpiece with a laser beam, and to a method of assembling the apparatus. The apparatus is specifically for machining the workpiece with a laser beam coupled into a fluid jet. In particular, the apparatus of the invention has an improved splash guard, i.e. has an improved protection against fluid and particulates splashing back from the workpiece into the apparatus. Further, the assembly method of the invention includes an alignment process supporting the improved splash guard protection.

### BACKGROUND

Conventional apparatuses for machining a workpiece with a laser beam, which is coupled into a fluid jet impinging onto a workpiece, are generally known.

In one such conventional apparatus, a splash guard is provided to a fluid jet outlet of the apparatus. The splash guard is realized by a thin metal sheet, and has the purpose of reducing the amount of fluid splashing back from the workpiece into the apparatus, when the workpiece is machined with the laser beam. This is, because fluid entering back into the apparatus may negatively affect the fluid jet generation inside of the apparatus. The fluid jet is typically generated by a fluid nozzle. If back-splashing fluid enters the apparatus and adheres to the nozzle, it may disturb the fluid jet generation such that the fluid jet flickers or even breaks down. This would make the workpiece machining process impossible or at least very inefficient. The thin metal sheet provides a relatively cheap solution, but has several disadvantages as described below.

The metal sheet splash guard is mounted onto the apparatus before its operation is started, and without having an exit aperture for the fluid jet. When the operation of the apparatus is started, the laser beam drills a hole into the thin metal sheet, which allows the fluid jet to exit. However, a shape and diameter of this exit aperture cannot be controlled. In particular, the resulting exit aperture is often not round, like the fluid jet, but rather oval of shape. Thus, unnecessary space is created, through which fluid splashing back from the workpiece may enter the apparatus. Furthermore, when the exit aperture is drilled by the laser beam, the fluid jet is already generated, so that fluid starts accumulating inside of the apparatus. This fluid needs to be released from the apparatus, and therefore the splash guard is provided with additional apertures. Unfortunately, also these additional apertures potentially allow fluid that splashes back from the workpiece to enter the apparatus, and there to deteriorate the fluid jet quality. Notably, any disturbance of the fluid jet generation leads to a systematically shorter effective fluid jet, and accordingly to a significantly decreased workpiece machining efficiency. Specifically, with the conventional apparatus employing the thin metal sheet solution, the efficiency may be decreased by up to 30% or more from a best case value of this solution.

Moreover, the exit aperture will disadvantageously deform, particularly widen, during the operation of the apparatus, due to laser beam absorption. This unavoidable deformation constantly increases the probability that fluid splashes back into the apparatus. In addition, the splash guard has to be replaced rather often (more or less each time the apparatus is started anew), because the metal sheet erodes during operation of the apparatus.

Other conventional apparatuses therefore use fixedly installed cover parts. The cover parts at least partially close the respective apparatus in direction of the workpiece, and have pre-made exit apertures for the fluid jet. However, the cover parts do not sufficiently prevent that back-splashing fluid enters the apparatus. This is because either the pre-made exit aperture is too large, or because additional apertures are provided in the cover parts, in order to allow either fluid or gas to exit. Furthermore, due to the fixed installment of the cover parts already before operating the apparatus, an alignment or re-alignment of the exit aperture with the fluid jet is difficult. This is actually one reason for providing these cover parts with relatively large exit apertures (compared to the fluid jet diameter). Furthermore, also an exchange of the cover parts is not possible or at least difficult, for instance, if a cover part needs to be cleaned or replaced after prolonged use of the apparatus.

JP 2013 180308 A describes a laser processing apparatus for processing a workpiece with laser light guided into a jet liquid column.

WO 2006/122441 A1 describes a method for material working achieved by means of a laser concentrically guided within a water jet.

US 2009/0084765 A1, which discloses the preamble of independent claim 1, describes a laser machining apparatus using a laser beam introduced into a jet liquid column.

WO 99/56907 describes a material shaping device with a laser beam, which is injected into a stream of liquid.

JP 2011 092966 A describes a laser processing apparatus which irradiates a laser beam along a liquid column.

In view of these problems and disadvantages, the present invention aims at improving the conventional apparatuses. It is accordingly an object of the present invention to provide an apparatus for machining a workpiece with a laser beam coupled into a fluid jet, which can machine the workpiece more efficiently and with improved process stability. In particular, the invention aims at better stabilizing the fluid jet when machining the workpiece, particularly, when drilling and milling the workpiece. To this end, the invention desires an improved protection against back-splashing fluid, and thus an undisturbed generation of the fluid jet inside of the apparatus, with a consequent increase in lifetime, and performance of components. Additionally, the invention also intends to reduce gas consumption, in case that a protective gas layer is provided enveloping the fluid jet.

### SUMMARY OF THE INVENTION

The object of the present invention is achieved by the solution provided in the enclosed independent claims. Advantageous implementations of the present invention are defined in the dependent claims.

In particular, the present invention proposes an apparatus with an enclosure acting as an improved splash guard, and proposes an assembly method of the apparatus that includes an alignment process of an exit aperture of the enclosure and the fluid jet. The structural features of the apparatus and the assembly method advantageously cooperate.

A first aspect of the present invention provides an apparatus for machining a workpiece with a laser beam according to claim 1.

The pressurized fluid jet acts like a wave guide for the laser beam, and guides the laser beam onto the workpiece by means of total internal reflection. Thus, the workpiece can be machined with the laser beam.

"Hermetic enclosure" means an enclosure, which prevents fluid and gas exchange between the inside of the apparatus and the atmosphere surrounding the apparatus, except through the exit aperture. Therefore, the materials forming the upper part and the lower part are impenetrable for fluid and gas. Furthermore, the connection between the upper part and the lower part is fluid and gas tight. Of course, in order to generate the fluid jet in the apparatus, the fluid needs to be supplied to the inside of the apparatus. Moreover, in the preferable case that the fluid jet is to be enveloped by a gas layer, also the protection gas needs to be supplied to the inside of the apparatus. However, the fluid and/or gas are supplied such that the apparatus and the external fluid and/or gas supply form a closed system. Therefore, such purposefully supplied fluid and/or gas is not to be exchanged with the atmosphere surrounding the apparatus, and thus does not mean that the enclosure is not hermetic. A preferred consequence of the hermetic enclosure is that the flow of fluid into the apparatus (for generating the fluid jet) is equal to the flow of fluid out of the apparatus through the exit aperture. Likewise, the flow of gas into the apparatus (for providing the protective gas layer around the fluid jet) is preferably equal to the flow of gas out of the apparatus through the exit aperture.

"Removably attached" means that the lower part can be detached from the upper part in a non-destructive manner without damaging any part of the apparatus. It means in particular that the lower part is intended to be removed. Preferably, it means that the lower part can be easily removed from the upper part, i.e. without any complicated and time-consuming disassembly of the apparatus or its enclosure, respectively.

"Coaxially aligned" implies that the exit aperture is round (at least within a deviation from perfect roundness of at most 5 micron, preferably at most 3 micron) and that a center of this round aperture is aligned with a center of the assumedly round cross-section of the fluid jet. In particular, coaxially aligned means that the fluid jet is centered within the round exit aperture (at least with a deviation from perfect centering of below 10 micron, preferably below 5 micron).

The hermetic enclosure of the apparatus serves as an improved fluid splash protection, which significantly reduces the probability that fluid splashes back from the workpiece into the apparatus. Thus, the apparatus can carry out a workpiece machining process, which is significantly more efficient and stable than a machining process carried out with a conventional apparatus.

One reason for the improved splash protection (and in fact for the hermiticity of the enclosure in the sense of this document) is that the enclosure does not have any additional fluid and/or gas release apertures. Such release apertures can be avoided because of the assembly method of the apparatus (described below in more detail), especially because of the assembly procedure of the lower part to the upper part. This assembly procedure includes an alignment process of the exit aperture and the fluid jet, which can advantageously be carried out with the lower part detached from the upper part. This is possible because of the design of the lower part, which is removably attachable to the upper part of the hermetic enclosure, and because of the interface unit and the hermetic interface design. Accordingly, during the alignment process, fluid does not accumulate in the apparatus, and thus no fluid release apertures are required.

Another reason is the coaxial alignment between the round fluid jet and the round exit aperture, which reduces unnecessary space through which splashing fluid could enter into the apparatus. The coaxial alignment is another advantageous consequence of the alignment process, which is carried out during assembly of the apparatus and improves the fluid jet stability.

Because the lower part is removable from the upper part, cleaning of the apparatus and replacement of parts of the apparatus are simplified. Further, the at least one magnetic element supports the ease of the assembly procedure of the lower part to the upper part, and thus the alignment process of the fluid jet and the exit aperture.

In a preferred implementation form of the apparatus, a hermetic interface between the upper part and the lower part is formed, preferably by a rubber V-ring, by a greased plate to plate contact, or by an ultra-flat plate to plate contact.

The hermetic interface ensures the hermeticity of the enclosure, even though the upper part and the lower part are separate parts, and are preferably easily removable from each other.

In a further preferred implementation form of the apparatus, the lower part is easily removable by pulling it away from the upper part.

Accordingly, in order to remove the lower part, no mechanical operations like de-screwing or de-soldering have to be carried out. The lower part can particularly be pulled off non-destructively from the upper part. This enables fast and easy replacement of the lower part, and also supports the alignment process during assembly of the apparatus.

In a further implementation form of the apparatus, when the lower part is removed, the lower part is re-attachable by simply approaching it to the upper part.

By making the lower part re-attachable by simply approaching the lower part and the upper part towards one another, the alignment process during assembly of the apparatus becomes particularly easy to implement.

In a further preferred implementation form of the apparatus, the apparatus is configured to perform an alignment process of the fluid jet with the exit aperture, when the lower part is removed.

That means that the apparatus has an alignment mode, which allows operation of the apparatus with the lower part detached. In this alignment mode, the apparatus is able to provide the fluid jet and couple the laser beam into the fluid jet, and then preferably use the laser beam monitoring for a pre-alignment of the fluid jet and the exit aperture in the horizontal plane. In particular, the apparatus may be configured to determine a state of the fluid jet by monitoring one or more laser beam reflection patterns, which patterns change when the fluid jet collides with some mechanical part. This can be used to determine that and when the fluid jet collides with an edge of the exit aperture of the lower part, in order to align the fluid jet at least roughly within this exit aperture.

In a further preferred implementation form of the apparatus, at least an exit nozzle of the lower part comprising the exit aperture is made of a hard material, preferably made of sapphire, tungsten carbide or diamond.

The exit aperture can be pre-fabricated and can be made of a hard material, because it is not drilled by the laser beam before intended use of the apparatus. Therefore, the exit aperture of the lower part can be made permanent, i.e. such that it does not change its shape and/or dimensions due to laser beam interaction when the apparatus is operated. Thus, the coaxial alignment is maintained over a prolonged time span, which leads to an improved machining process, particularly in terms of efficiency and stability.

In a further preferred implementation form of the apparatus, a diameter of the exit aperture is between 1-6 times, preferably between 1-3 times, a diameter of the fluid jet.

Thus, the exit aperture can closely guide the fluid jet, wherein the fluid jet is preferentially enveloped by a gas layer. Accordingly, no unnecessary space is created, through which fluid may splash back from the workpiece into the apparatus. The small exit aperture diameter is only possible, because of the specific method by which the apparatus is assembled.

In a further preferred implementation form of the apparatus, the interface unit further comprises a mechanical element, preferably a spring element, and the lower part is attached mechanically to the upper part by means of the mechanical element.

This alternative implementation form of the interface unit supports the assembly procedure of the lower part to the upper part, and the alignment process of the fluid jet and the exit aperture.

In a further preferred implementation form of the apparatus, the upper part is provided with a nozzle holder holding the fluid jet generation nozzle.

That means that the upper part is preferably a non-removable part, which provides a stable seat for the fluid jet generation nozzle. This makes the fluid jet generation more precise and stable.

In a further preferred implementation form of the apparatus, a fluid aperture of the nozzle is made of a hard material, preferably made of sapphire or diamond.

Since the aperture of the fluid jet generation nozzle is made of one of these preferred materials, its shape and dimensions can better withstand the fluid pressure and incident laser radiation. Thus, the fluid jet passage is durably stabilized.

In a further preferred implementation form of the apparatus, the nozzle comprises a fluid aperture having a diameter of between 10-200 and the fluid jet has a diameter of between 0.64-0.94 times the diameter of the fluid aperture.

These dimensions provide advantages in terms of machining the workpiece with the laser beam, and stability of the fluid jet.

In a further preferred implementation form of the apparatus, the apparatus further comprises a gas supply unit configured to provide a gas that envelopes the fluid jet before it is output through the exit aperture.

The gas enveloping the fluid jet stabilizes the fluid jet, and thus leads to improved fluid jet properties and machining process efficiency. Due to the hermetic enclosure and coaxially aligned small exit aperture, the gas consumption for the protective gas layer can be significantly decreased, without the fluid jet becoming less stable.

In a further preferred implementation form of the apparatus, the gas supply unit includes a gas entrance aperture provided through the upper part and a gas supply chamber surrounded by the hermetic enclosure and configured to provide the gas to the fluid jet.

It is noted that although the gas entrance aperture is provided through the hermetic enclosure, the hermeticity of the enclosure is not affected. This is due to the fact that the inside of the apparatus, the gas supply unit, and an external gas supply form a closed system during operation of the apparatus, which does do not allow any exchange of fluid and gas between the inside of the apparatus and the atmosphere surrounding the apparatus.

In a further preferred implementation form of the apparatus, the apparatus further comprises an anti-fluid unit configured to prevent that fluid accumulates on the outer surface of the lower part, particularly near the exit aperture.

The use of the anti-fluid unit removes fluid from the outer surface of the lower part. Fluid accumulating on the outer surface of the lower part could interact with the fluid jet and/or supporting gas flow. This would negatively affect the fluid jet properties, and would decrease the efficiency of the machining process. Accordingly, the use of the anti-fluid unit improves the machining process in terms of efficiency and stability. The anti-fluid unit may also be configured to prevent that fluid accumulates on the outer surface of the upper part near its connection with the lower part. For instance, the upper part may include an upper coupling body and a lower coupling nut. In this case the anti-fluid unit can be configured to prevent that fluid accumulates on the outer surface of the coupling nut.

In a further preferred implementation form of the apparatus, the anti-fluid unit comprises a fluid suction unit configured to transport fluid away from the outer surface of the lower part.

In a further preferred implementation form of the apparatus, the anti-fluid element comprises a capillary element configured to absorb fluid from the outer surface of the lower part.

In a further preferred implementation form of the apparatus, the anti-fluid unit comprises a fluid repellant material provided on the outer surface of the lower part. In a further preferred implementation form of the apparatus, the anti-fluid unit comprises a heating unit configured to heat the outer surface of the lower part, thus vaporizing fluid away.

With these preferred implementation forms of the anti-fluid unit, a particularly reliable fluid removal from the outer surface of the lower part is achieved.

A second aspect of the present invention provides a method of assembling an apparatus according to claim 18.

The precise alignment of the fluid jet and the exit aperture in the horizontal plane ensures their coaxial orientation within a range of below 10 micron, preferentially below 5 micron.

Since the assembly method of the second aspect is configured to perform the alignment process, which comprises the pre-aligning and the precise aligning, the above-described advantages of the apparatus of the first aspect are supported. For example, since the pre-alignment is carried out with the lower part removed from the upper part, fluid cannot accumulate inside of the apparatus during the precise alignment stage, and thus the lower part requires no fluid release apertures. As a consequence, the enclosure of the apparatus can be made hermetic. Further, by means of the interface unit provided to the upper part of the enclosure, the attachment of the upper part and the lower part can be carried out easily. This allows carrying out the pre-alignment with the lower part detached, since it can then be simply attached to the upper part without dis-adjusting this coarse alignment. Further, it enables the fine alignment of the fluid jet and exit aperture, and thus the resulting advantageous coaxial orientation, i.e. the centering of the fluid jet within the exit aperture.

If the apparatus includes an anti-fluid unit, the anti-fluid unit is preferably installed after the precise alignment step of the fluid jet and the exit aperture.

Accordingly, the assembly method of the second aspect can be provided with the hermetic enclosure, and can consequently benefit from all advantages and effects as described above. The alignment process can be carried out simply and fast. The alignment process can be easily repeated, for example, in case that an unexpected misalignment occurs or that the apparatus is disassembled for reasons of cleaning or maintenance.

### BRIEF DESCRIPTION OF DRAWINGS

The above-described aspects and preferred implementation forms of the present invention are explained in the following description of specific embodiments in relation to the enclosed drawings, in which
FIG. 1 shows an apparatus according to an embodiment of the present invention.
FIG. 2 shows an apparatus according to an embodiment of the present invention.
FIG. 3 shows an apparatus according to an embodiment of the present invention.
FIG. 4 shows a method according to an embodiment of the present invention.
FIG. 5 shows a first step of an assembly method according to an embodiment of the present invention with respect to an apparatus according to an embodiment of the present invention.
FIG. 6 shows a second step of an assembly method according to an embodiment of the present invention with respect to an apparatus according to an embodiment of the present invention.
FIG. 7 shows a third step of an assembly method according to an embodiment of the present invention with respect to an apparatus according to an embodiment of the present invention.
FIG. 8 shows a fourth step of an assembly method according to an embodiment of the present invention with respect to an apparatus according to an embodiment of the present invention.

### DETAILED DESCRIPTION OF EMBODIMENTS

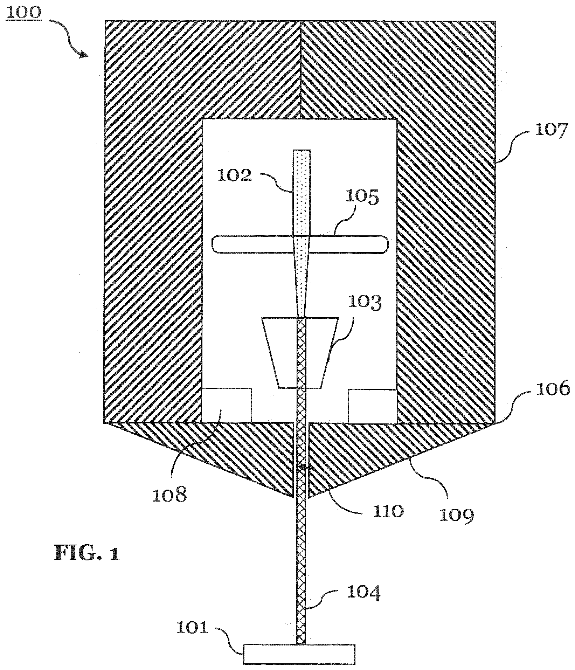

FIG. 1 shows an apparatus 100 according to an embodiment of the present invention. In particular, the apparatus 100 is configured to machine a workpiece 101 with a laser beam 102. The workpiece 101 may be made of a material including, for example, metals, ceramics, diamonds, semiconductors, carbides, alloys, composites or ultrahard materials. The workpiece 101 is notably not a part of the apparatus 100. However, the workpiece 101 can be positioned on a machining surface, which may or may not be part of the apparatus 100. In either case, the apparatus 100 can be arranged such that it can machine the workpiece 101 disposed on the machining surface. The apparatus 100 may also control movements of the machining surface in up to three dimensions.

The apparatus comprises a nozzle 103, at least one optical element 105, and a hermetic enclosure 106 including an upper part 107 and a lower part 109. The hermetic enclosure 106 surrounds the nozzle 103 and the at least one optical element 105. The hermetic enclosure 106 may also surround further units and components of the apparatus 100.

The fluid jet generation nozzle 103 is configured to generate a pressurized fluid jet 104. The pressurized fluid jet 104 is provided by the apparatus 100 onto the workpiece 101. The at least one optical element 105 is configured to couple the laser beam 102 into the fluid jet 104, in particular through the fluid jet generation nozzle aperture and towards the workpiece 101. The at least one optical element 105 may include, for example, one or more lenses, lens assemblies, light guiding optics, beam splitters, mirrors, filters, or polarizers. The nozzle 103 and the at least one optical element 105 may be separated, for instance, by an optical window, in order to prevent contact of the optical element 105 and the fluid.

The laser beam 102 is guided by the preferably thin (i.e. having a diameter in the µm range) fluid jet 104, in principle like it would be guided in an optical fiber. The laser beam 102 is directed towards and onto the workpiece 101, and can thus be used to precisely machine the workpiece 101, while the fluid jet 104 continually cools the workpiece 101 and potentially removes debris. For instance, the apparatus 100 may specifically be configured to accurately cut or shape the workpiece 101.

The laser beam 102 may be a pulsed or continuous laser beam 102. The laser beam 102 is provided by a laser, which may be a part of the apparatus 100, or which may be external but couples the laser beam 102 into a laser supply port of the apparatus 100. The laser beam 102 may be visible, and is preferably from the green spectrum. For instance, the laser beam 102 may have a wavelength ranging from of 355 nm to 1064 nm, preferentially 515 nm or 532 nm.

The upper part 107 of the hermetic enclosure 106 is provided with an interface unit 108. The interface unit 108 may either be a part of the upper part 107 or may be connected to the upper part 107. The upper part 107 and the interface unit 108 may also be formed integrally. In an alternative but less preferred implementation form, the interface unit 108 could be provided to the lower part 109 instead of the upper part 107. By means of the interface unit 108, the lower part 109 is removably attached to the upper part 107. That is, the lower part 109 is actually held by the interface unit 108 in the attached state, but attaches also to the upper part 107 in the sense that it contacts the upper part 107, so that they together form the hermetic enclosure 106.

The lower part 109 has an exit aperture 110 for outputting the fluid jet 104 towards the workpiece 101. At least the exit aperture 110 of the lower part 109, i.e. at least the part of the lower part 109 defining the exit aperture 110, is preferably made of a hard material like sapphire, tungsten carbide or diamond. However, also the whole lower part 109 may be made from such a hard material. These materials are hermetic with respect to fluid and gas. However, even if some portion of the lower part 109 is made of another material, this material is also hermetic with respect to fluid and gas, in order to prevent any exchange of fluid and gas between the inside of the apparatus 100 and the atmosphere surrounding the apparatus 100 (other than an exchange through the exit aperture 110). The same is true for the material of the upper part 107. The upper part 107 may, for instance, be made from a metal or a hard plastic. It is of course also possible to make the lower part 109 and the upper part 107 of the same material.

The exit aperture 110 and the fluid jet 104 are coaxially aligned, that is, the fluid jet 104 is centered within the exit aperture no. Thereby, the exit aperture 110 has preferably a diameter, which closely surrounds the fluid jet 104. In particular, the diameter of the exit aperture 110 is preferably between 1-6 times, more preferably between 1-3 times, the diameter of the fluid jet 104. The diameter of the fluid jet 104 is determined by the nozzle 103. The nozzle 103 has preferably an aperture with a diameter of between 10-200 µm, and the fluid jet 104 has preferably a diameter of between 0.64-0.94 times the diameter of the nozzle aperture.

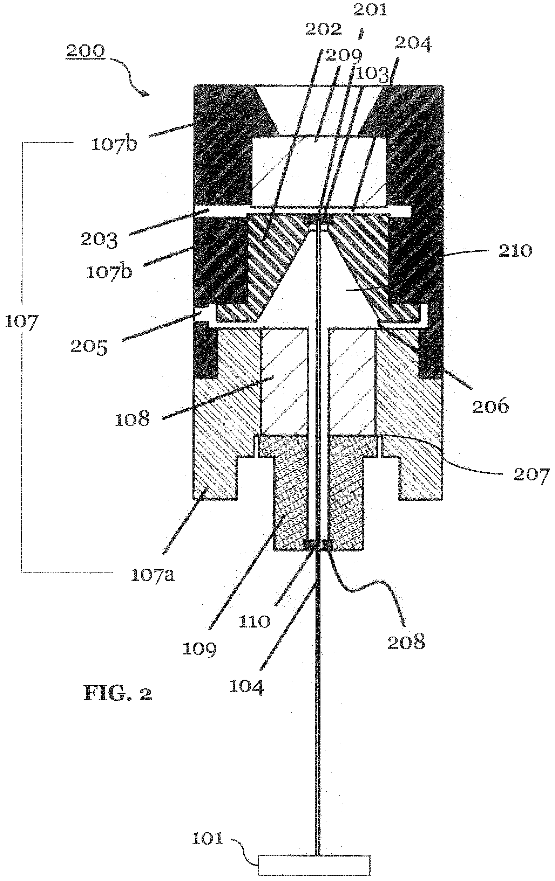

FIG. 2 shows an apparatus 200 according to an embodiment of the present invention, which builds on the apparatus 100 shown in FIG. 1. Identical elements in FIG. 2 and FIG. 1 are labelled with the same reference signs and function likewise. Accordingly, the apparatus 200 of FIG. 2 includes again the above-described fluid jet generation nozzle 103 and the at least one optical element 105, which is configured to provide the pressurized fluid jet 104 guiding the laser beam 102. Further, the apparatus 200 has again the above-described hermetic enclosure 106 consisting of the upper part 107 and the lower part 109, which are removably attached to another by means of the interface unit 108. As shown in FIG. 2, the interface unit 108 can be formed surrounding the fluid jet 104. The interface unit 108 may comprise of a single part or of multiple parts, and may be attached to or be part of the upper part 107.

In FIG. 2, the upper part 107 is shown to include two parts, namely a coupling body 107b and a coupling nut 107a. The coupling nut 107a may be removably attached to the coupling body 107b. An interface between the coupling body 107b and nut 107a may be made hermetic with an O-ring, by a greased plate to plate contact, or by an ultra-flat plate to plate contact. The coupling nut 107a preferably comprises, or forms a unit with, the interface unit 108. The lower part 109 is accordingly removably attached to the coupling nut 107a by means of the interface unit 108.

Further in FIG. 2, the upper part 107 and lower part 109 are attached such by means of the interface unit 108 that they form a hermetic interface 207, i.e. they attach to another only in a hermetic manner. The hermetic interface 207 is particularly formed between the coupling nut 107a and the lower part 109. Preferably, the hermetic interface 207 is formed by a V-ring, preferably a rubber V-ring, provided between the upper part 107, specifically the coupling nut 107a, and the lower part 109. Alternatively, the hermetic interface 207 is formed by a greased plate to plate contact of at least a part of the upper part 107, specifically the coupling nut 107a, and the lower part 109, or by an ultra-flat plate to plate contact. Thereby, ultra-flat plate to plate contact means that an average surface roughness of the connecting regions of the lower part 109 and upper part 107, specifically the coupling nut 107a, respectively, is 0.1 µmor less, preferably 0.05 µm or less.

It can also be seen in FIG. 2 that the lower part 109 may have a dedicated exit nozzle 208, in which the exit aperture 110 is provided. The exit nozzle 208 can thereby be formed integrally with the lower part 109, i.e. could be made of the same material. However, it is preferably made of a different material (more preferably a harder material) than the remainder of the lower part 109. Preferably, the nozzle 208 and thus the aperture 110 are formed by a hard and durable material, like sapphire, tungsten carbide, or diamond. In this way, the exit aperture 110 can be provided with a precise and stable shape and diameter.

FIG. 2 also shows that the apparatus 200 can include a fluid supply unit 203, 204. The fluid supply unit 203, 204 may comprise a fluid supply chamber 203, into which fluid may be supplied, for example, by an external fluid supply via a fluid aperture provided through the upper part 107. The fluid supply unit 203, 204 also includes a fluid acceleration chamber 204 for accelerating the supplied fluid before it enters a fluid entrance aperture 201 of the fluid jet generation nozzle 103, such that the pressurized fluid jet 104 can be formed. Notably, in use of the apparatus 200 the external fluid supply forms a closed circuit with the fluid supply chamber 203 and the fluid acceleration chamber 204, such that the enclosure 106 is hermetic in the sense of this document even with the fluid aperture. The fluid supplied to the fluid supply chamber 204 is preferably water. The fluid acceleration chamber 204 has preferably a flat disc shape with a preferred height of below 1 mm, more preferred below 0.5 mm, in order to sufficiently accelerate the fluid. The fluid entrance aperture 201 of the nozzle 103 for generating the pressurized fluid jet 104 has preferably a diameter of between 10-200 µm.

FIG. 2 also shows a nozzle holder 202 that may be part of the apparatus 200, and is configured to hold the nozzle 103. The nozzle holder 202 is preferably connected to the upper part 107 of the hermetic enclosure 106, and may even be a part of the upper part 107. Preferably, the nozzle holder 202 is surrounded by the coupling body 107b of the upper part 107, i.e. is inserted into the coupling body 107b. There, it may be held in place (preferably from below) by the coupling nut 107a attached to the coupling body 107b. That is, the nozzle holder 202 may be fixed between the coupling body 107b and nut 107a. The nozzle holder 202 is preferably made of a metal. The nozzle holder 202 is preferably formed such that a space 210 is formed within the apparatus 200. The fluid jet 104 travels through this space 210 after it is generated by the fluid entrance aperture 201 of the nozzle 103. The space 210 may advantageously be used to provide a gas to the fluid jet 104, which gas can then create a stabilizing gas layer around the fluid jet 104. The shape of the space 210 is configured to provide the advantageous stabilization effect of the fluid jet 104.

To produce such an enveloping gas layer, as shown in FIG. 2, the apparatus 200 may further include a gas supply chamber 205 configured to provide the gas to the space 210 and thus to the fluid jet 104. The gas then envelopes the fluid jet 104, before it is output through the exit aperture 110. The gas supply chamber 205 and the space 210 thus form together a gas supply unit, wherein the gas supply chamber 205 has an aperture 206 that leads into the space 210. The gas supply unit may further include a gas entrance aperture provided through the upper part 107 of the hermetic enclosure 106, specifically through the coupling body 107b, and leading into the gas supply chamber 205 of the apparatus 200 that is surrounded by the hermetic enclosure 106.

Notably, in the same manner as described above for the fluid supply unit 203, 204, the gas is supplied by an external gas supply, which forms a closed gas circuit with the gas supply unit 205, 210 in use of the apparatus 200, and does thus not allow any exchange of gas between the inside of the apparatus 200 and the atmosphere surrounding the apparatus 200. Thus, the hermiticity of the hermetic enclosure 106 is not impacted even with the gas entrance aperture. Preferably, the gas supplied to the gas supply chamber 205 via the gas entrance aperture is helium. The helium enveloping the fluid jet 104 within the space 210, before it is output from the exit aperture 110, helps stabilizing the fluid jet 104.

FIG. 2 also shows that the apparatus 200 may include an optical window 209 separating the fluid generation nozzle 103 from regions of the apparatus 200, from which the laser beam 102 originates, in particular where also the at least one optical element 105 is located (which is not shown in FIG. 2). Preferably the optical window 209 is made of a fused silica. Further, the optical window 209 is preferably arranged above the nozzle holder 202 and the fluid acceleration chamber 204.

FIG. 2 also illustrates that the interface unit 108 is mainly responsible for holding the lower part 109 in place when the apparatus 200 is completely assembled, and that the lower part 109 is attached to the upper part 107, specifically the coupling nut 107a, by forming the hermetic interface 207. The upper part 107 itself does preferably not exert any holding force onto the lower part 109.

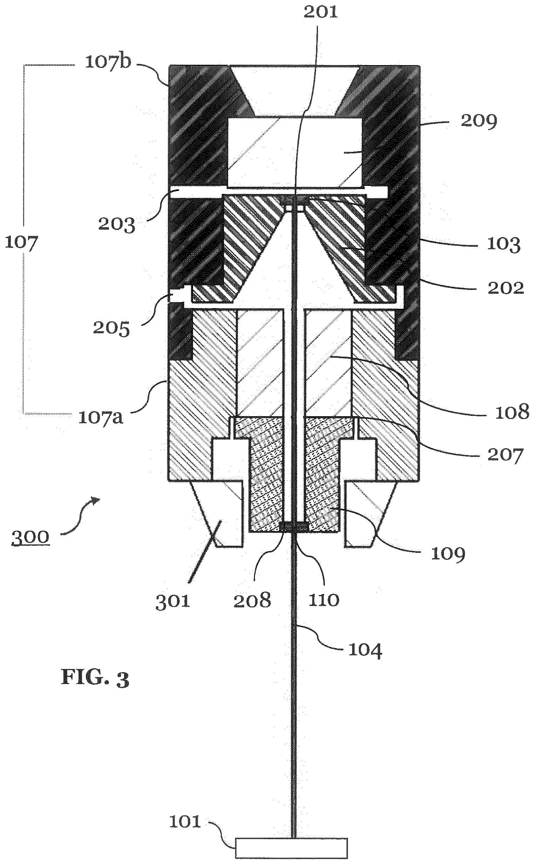

FIG. 3 shows an apparatus 300 according to an embodiment of the present invention, which builds on the apparatus 100 shown in FIG. 1 and the apparatus 200 shown in FIG. 2. Identical elements in FIG. 3 and FIG. 1 and/or FIG. 2 are labelled with the same reference signs and function likewise. That is, the apparatus 300 includes again the above-described nozzle 103, the at least one optical element 105 and the hermetic enclosure 106, which includes the upper part 107, preferably divided into the coupling body 107b and the coupling nut 107a as shown in FIG. 2, with the interface unit 108, and includes the lower part 109 with the exit aperture 110.

In particular, FIG. 3 illustrates that the apparatus 300 can further be provided with an anti-fluid element 301, which is configured to prevent that fluid accumulates on the outer surface of the lower part 109 and optionally also on the outer surface of the coupling nut 107a. Especially, the anti-fluid unit 301 prevents that fluid accumulates near the exit aperture 110, particularly on the exit nozzle 208, or even in the exit aperture 110 of the lower part 109. The anti-fluid unit 301 is thus for external fluid accumulation prevention and is preferably attached to the upper part 107, specifically the coupling nut 107a.

Preferably, the anti-fluid unit is a fluid suction unit, which is configured to absorb fluid from the outer surface of the lower part 109. Such a suction unit can, for instance, be realized by means of a vacuum system or a module that creates an underpressure. The fluid suction unit is adapted to suck away the fluid from the outer surface of the lower part 109. Alternatively, the anti-fluid unit 301 may be a capillary element configured to absorb fluid from the outer surface of the lower part 109. In particular, such a capillary element has some kind of capillary apertures or microstructures, into which fluid is pulled by the capillary effect when it starts accumulating on the outer surface of the lower part 109. The capillary element may be sponge-like or a sponge, which is able to absorb the fluid. Alternatively, the anti-fluid unit 301 may comprise a fluid repellent material provided on the outer surface of the lower part 109, for instance as a layer or painting. The repellant can prevent that fluid accumulates on the outer surface of the lower part 109, for instance, because the fluid cannot adhere thereto. Finally, the anti-fluid unit 301 may also comprise a heating unit configured to heat the outer surface of the lower part 109, and thus cause an evaporation of the fluid accumulating on the outer surface of the lower part 109. It is noted that fluid in this document is preferably water, so that the anti-fluid unit 301 may in each case be particularly adapted to absorb or remove water from the outer surface of the lower part 109.

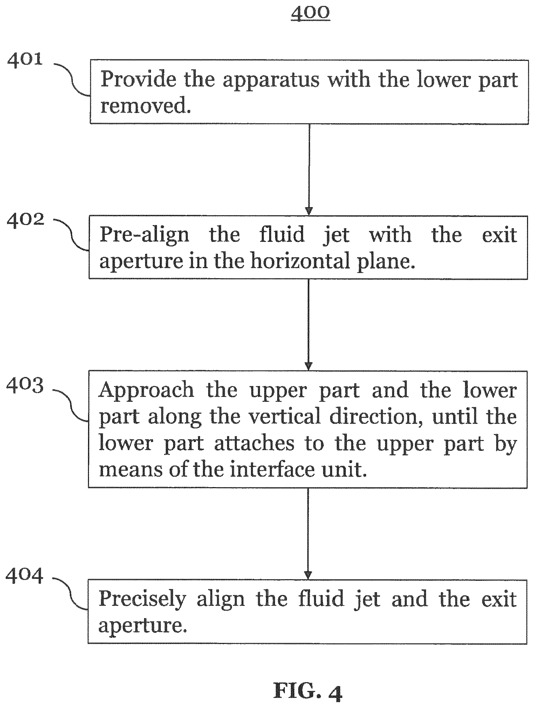

FIG. 4 shows a method 400 according to an embodiment of the present invention. The method 400 is in particular for assembling at least some parts of the apparatus 100, 200 or 300 shown in the previous figures. In particular, the method 400 relates at least to an assembly procedure of the lower part 109 to the upper part 107. The assembly procedure comprises an alignment process. The method 400 comprises particularly a first step 401 of providing the apparatus 100, 200, 300 with the lower part 109 removed. For example, before the first complete assembly of the apparatus 100, 200, 300, all of its parts may be assembled except for the lower part 109. Or, after the apparatus 100, 200, 300 has already been assembled, the lower part 109 may be removed, and the apparatus 100, 200, 300 may be re-assembled. The method 400 also comprises a second step 402 of pre-aligning, in the horizontal plane, the fluid jet 104 with the exit aperture 110. The horizontal plane is thereby defined by the plane perpendicular to the vertical direction, wherein the vertical direction is defined by the direction of the (straight) fluid jet 104 when it is generated by the fluid generation nozzle 103, particularly the fluid entrance aperture 201 of the nozzle 103. The method 400 further comprises a step 403 of approaching the upper part 107 and the lower part 109, along the vertical direction, until the lower part 109 attaches to the upper part 107 by means of the interface unit 108. Thereby, either the lower part 109 may be moved towards the upper part 107, or the upper part 107 may be moved towards the lower part 109, or both parts 107 and 109 may be moved towards another. Finally, the method 400 comprises a step 404 of precisely aligning the fluid jet 104 and the exit aperture 110. This fine aligning step 404 may be done by moving the lower part 109 in the horizontal plane. By precisely aligning the fluid jet 104 and the exit aperture 110, their coaxial alignment can be ensured. However, it is also possible to move only a part of the lower part 109 in the horizontal plane, for instance, the exit nozzle 208 having the exit aperture 110. To this end, the exit nozzle 208 may be movable at least in the horizontal plane relatively to the remainder of the lower part 109.

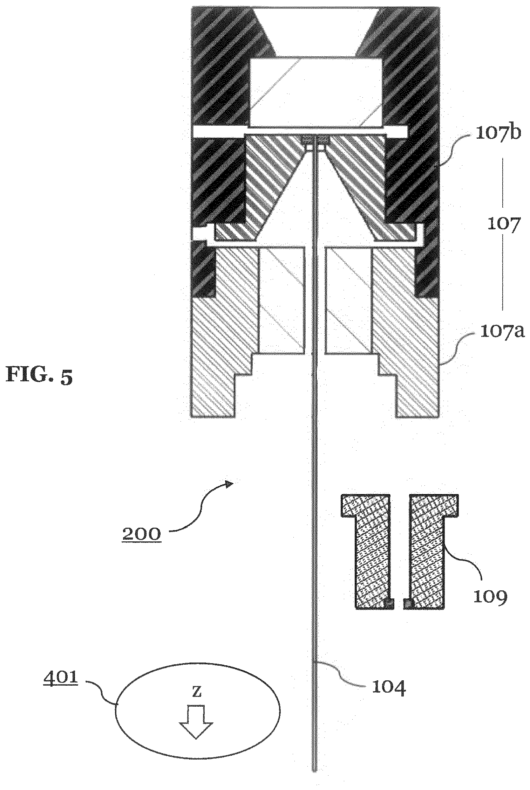

The FIGs. 5-8 respectively show the steps 401-404 of the method 400 of FIG. 4 in an illustration using the apparatus 200 shown in FIG. 2. That is, the upper part 107 is divided into the coupling body 107b and the coupling nut 107a. The same method 400 is of course possible with the apparatus 100 shown in FIG. 1, or the apparatus 300 shown in FIG. 3, provided that the anti-fluid unit 301 is installed in a subsequent step.

In particular, FIG. 5 shows the first step 401 of the method 400, in which the lower part 109 is provided removed from the upper part 107. This can be achieved either by not assembling the lower part 109 (after assembling for the first time the remainder of the apparatus 200), but may also be achieved, as indicated in FIG. 5, by moving the lower part 109 relatively along the vertical direction (z-direction) away from the upper part 107. For instance, the lower part 109 may be simply pulled away from the upper part 107, specifically the coupling nut 107a, in order to detach it.

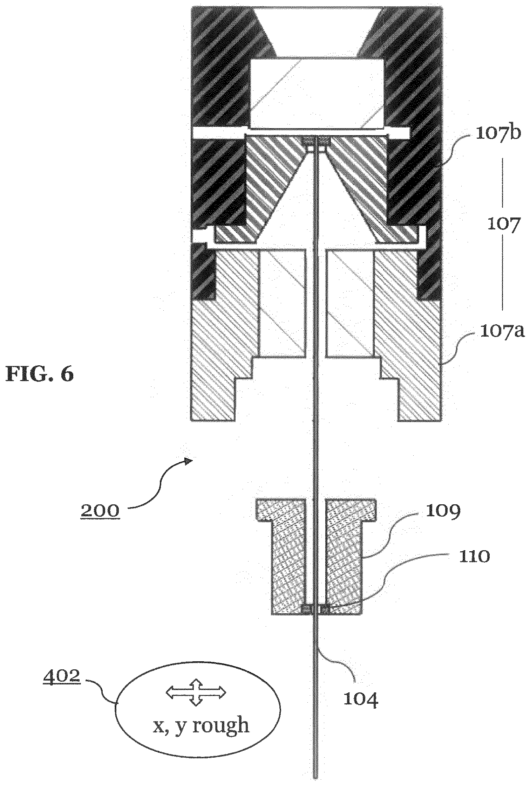

FIG. 6 shows the second step 402 of the method 400. In particular, a rough alignment of the fluid jet 104 and the exit aperture 110 may here be carried out in the horizontal plane (x- and y-directions), such that at the end of the pre-alignment step 402, the fluid jet 104 at least passes through the exit aperture 110 without impinging on the edges of the exit aperture 110. However, the fluid jet 104 and the exit aperture 110 are not yet necessarily coaxially aligned.

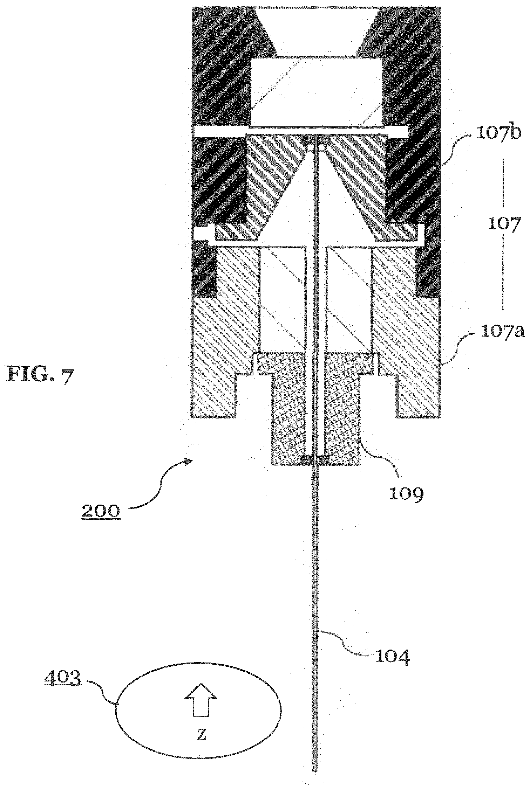

FIG. 7 shows a third step 403 of the method 400, in which the lower part 109 and the upper part 107 are brought together along the vertical direction (z-direction). The lower part 109 thus attaches to the upper part 107, specifically to the coupling nut 107a, by means of the interface unit 108. Since the fluid jet 104 and the exit aperture 110 are already roughly aligned in the horizontal plane, such that the fluid jet 104 passes through the exit aperture 110, fluid accumulating in the apparatus 200 can be avoided. The hermetic enclosure 106 is formed in this attachment step 403.

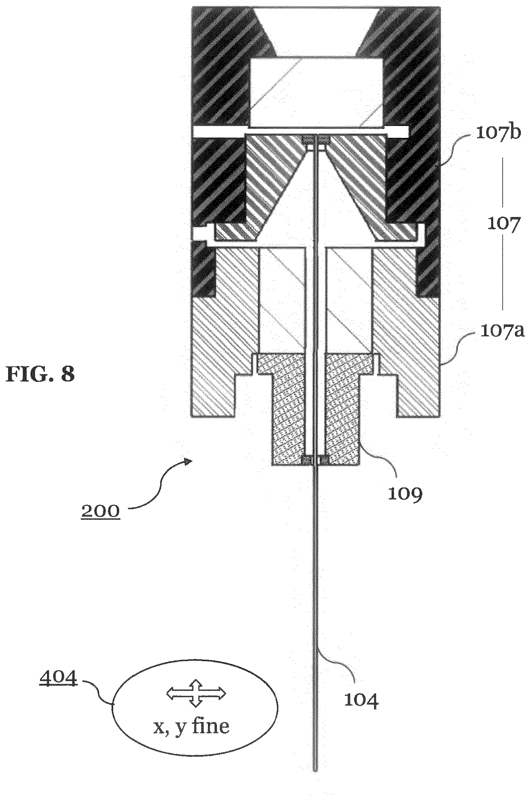

FIG. 8 shows the fourth step 404 of the method 400, in which finally a fine alignment of the fluid jet 104 and the exit aperture no is done. In particular, they are aligned further in the horizontal plane (x- and y-directions), until they are coaxially aligned. The hermetic enclosure 106 is not impacted by this fine alignment step 404.

That a coaxial alignment in the sense of the present invention is achieved can be well-detected, for instance, based on an amount of light decoupling. Already for a slight misalignment of the fluid jet 104 and the exit aperture 110, an irregular light decoupling can be observed. For larger misalignments, a permanent decoupling is observed. This light decoupling is detectable as a specific light pattern, which is generated by the laser beam 102 on the workpiece 101 (or a dedicated calibration surface used instead of the workpiece 101).

In summary, the present invention provides an apparatus 100, 200, 300, and an assembly method 400, that enable a more efficient and stable machining of a workpiece 101 with a laser beam 102 coupled into a fluid jet 104. In particular, due to an improved splash protection provided by the hermetic enclosure 106, the stability of the fluid jet 104 is improved when machining the workpiece 101.

The present invention has been described in conjunction with various embodiments as examples as well as implementation forms. In the description the word "comprising" does not exclude other elements or steps and the indefinite article "a" or "an" does not exclude a plurality. A single element or other unit may fulfill the functions of several entities or items.

## Claims

1. Apparatus (100, 200, 300) for machining a workpiece (101) with a laser beam (102), the apparatus (100, 200, 300) comprising
a nozzle (103) for generating a pressurized fluid jet (104),
at least one optical element (105) configured to couple the laser beam (102) into the fluid jet (104),
a hermetic enclosure (106) surrounding the nozzle (103) and the at least one optical element (105), wherein the hermetic enclosure (106) includes
an upper part (107) provided with an interface unit (108), and
a lower part (109) removably attached to the upper part (107) by means of the interface unit (108) and comprising an exit aperture (110) for outputting the fluid jet (104) towards the workpiece (101),
wherein the exit aperture (110) and the fluid jet (104) are coaxially aligned, and
wherein the apparatus (100, 200, 300) is **characterized in that**
the interface unit (108) comprises a magnetic element, and the lower part (109) is attached magnetically to the upper part (107) by means of the magnetic element.

2. Apparatus (200, 300) according to claim 1, wherein
a hermetic interface (207) between the upper part (107) and the lower part (109) is formed by a rubber V-ring, by a greased plate to plate contact, or by an ultra-flat plate to plate contact.

3. Apparatus (100, 200, 300) according to claim 1 or 2, wherein
the lower part (109) is easily removable in use by pulling it away from the upper part (107).

4. Apparatus (100, 200, 300) according to one of the claims 1 to 3, wherein, when the lower part (109) is removed,
the lower part (109) is re-attachable in use by simply approaching it to the upper part (109).

5. Apparatus (200, 300) according to one of the claims 1 to 4, wherein
at least an exit nozzle (208) of the lower part (109) comprising the exit aperture (110) is made of a hard material, preferably made of sapphire, tungsten carbide or diamond.

6. Apparatus (100, 200, 300) according to one of the claims 1 to 5, wherein
a diameter of the exit aperture (110) is between 1-6 times, preferably between 1-3 times, a diameter of the fluid jet (104) of the apparatus in use.

7. Apparatus (200, 300) according to one of the claims 1 to 6, wherein
the upper part (107) is provided with a nozzle holder (202) holding the nozzle (103).

8. Apparatus (100, 200, 300) according to one of the claims 1 to 7, wherein
a fluid aperture (201) of the nozzle (103) is made of a hard material, preferably made of sapphire or diamond.

9. Apparatus (200, 300) according to one of the claims 1 to 8, wherein
the nozzle (103) comprises a fluid aperture (201) having a diameter of between 10-200 µm, and
the fluid jet (104) of the apparatus in use has a diameter of between 0.64-0.94 times the diameter of the fluid aperture (201).

10. Apparatus (100) according to one of the claims 1 to 9, further comprising
a gas supply unit (205, 210) configured to provide a gas that envelopes the fluid jet (104) before it is output through the exit aperture (110).

11. Apparatus (200, 300) according to claim 10, wherein
the gas supply unit (205, 210) includes a gas entrance aperture (205) provided through the upper part (107) and a gas supply chamber (210) surrounded by the hermetic enclosure (106) and configured to provide the gas to the fluid jet (104).

12. Apparatus (300) according to one of the claims 1 to 11, further comprising an anti-fluid unit (301) configured to prevent that fluid accumulates on the outer surfaces of the lower part (109), particularly near the exit aperture (110).

13. Apparatus (300) according to claim 12, wherein
the anti-fluid unit (301) comprises a fluid suction unit configured to aspirate fluid from the outer surface of the lower part (109).

14. Apparatus (300) according to claim 12, wherein
the anti-fluid element (301) comprises a capillary element configured to transport fluid away the outer surface of the lower part (109).

15. Apparatus (300) according to claim 12, wherein
the anti-fluid unit (301) comprises a fluid repellant material provided on the outer surface of the lower part (109).

16. Apparatus (300) according to claim 12, wherein
the anti-fluid unit (301) comprises a heating unit configured to heat the outer surface of the lower part (109), thus vaporizing fluid away.

17. Method of assembling an apparatus (100, 200, 300) according to one of the claims 1 to 16, the method comprising
providing (401) the apparatus (100, 200, 300) with the lower part (109) removed from the upper part (107),
pre-aligning (402), in the horizontal plane, the fluid jet (104) with the exit aperture (110),
approaching (403) the upper part (107) and the lower part (109), along the vertical direction, until the lower part (109) attaches to the upper part (107) by means of the interface unit (108), and
precisely coaxially aligning (404) the fluid jet (104) and the exit aperture (110).

## Patentansprüche

1. Einrichtung (100, 200, 300) zum Bearbeiten eines Werkstücks (101) mit einem Laserstrahl (102), wobei die Einrichtung (100, 200, 300) Folgendes umfasst
eine Düse (103) zum Erzeugen eines druckbeaufschlagten Fluidstrahls (104),
mindestens ein optisches Element (105), das dazu ausgelegt ist, den Laserstrahl (102) in den Fluidstrahl (104) einzukoppeln,
eine hermetische Einhausung (106), die die Düse (103) und das mindestens eine optische Element (105) umgibt, wobei die hermetische Einhausung (106) Folgendes umfasst
einen oberen Teil (107), der mit einer Schnittstelleneinheit (108) versehen ist, und
einen unteren Teil (109), der entfernbar an dem oberen Teil (107) mittels der Schnittstelleneinheit (108) angebracht ist und eine Austrittsöffnung (110) zum Ausgeben des Fluidstrahls (104) hin zu dem Werkstück (101) umfasst,
wobei die Austrittsöffnung (110) und der Fluidstrahl (104) koaxial ausgerichtet sind, und
wobei die Einrichtung (100, 200, 300) **dadurch gekennzeichnet ist, dass**
die Schnittstelleneinheit (108) ein Magnetelement umfasst und der untere Teil (109) magnetisch an dem oberen Teil (107) mittels des Magnetelements angebracht ist.

2. Einrichtung (200, 300) nach Anspruch 1, wobei
eine hermetische Schnittstelle (207) zwischen dem oberen Teil (107) und dem unteren Teil (109) durch einen V-Gummiring, durch einen geschmierten Kontakt von Platte zu Platte oder durch einen ultraflachen Kontakt von Platte zu Platte ausgebildet ist.

3. Einrichtung (100, 200, 300) nach Anspruch 1 oder 2, wobei
der untere Teil (109) in Verwendung leicht durch Wegziehen davon von dem oberen Teil (107) entfernbar ist.

4. Einrichtung (100, 200, 300) nach einem der Ansprüche 1 bis 3, wobei, wenn der untere Teil (109) entfernt ist, der untere Teil (109) in Verwendung durch einfaches Annähern davon an den oberen Teil (109) wiederanbringbar ist.

5. Einrichtung (200, 300) nach einem der Ansprüche 1 bis 4, wobei
zumindest eine Austrittsdüse (208) des unteren Teils (109), die die Austrittsöffnung (110) umfasst, aus einem harten Material besteht, vorzugsweise aus Saphir, Wolframkarbid oder Diamant besteht.

6. Einrichtung (100, 200, 300) nach einem der Ansprüche 1 bis 5, wobei
ein Durchmesser der Austrittsöffnung (110) zwischen dem 1-6-Fachen, vorzugsweise zwischen dem 1-3-Fachen, eines Durchmessers des Fluidstrahls (104) der Einrichtung in Verwendung beträgt.

7. Einrichtung (200, 300) nach einem der Ansprüche 1 bis 6, wobei
der obere Teil (107) mit einem Düsenhalter (202), der die Düse (103) hält, versehen ist.

8. Einrichtung (100, 200, 300) nach einem der Ansprüche 1 bis 7, wobei
eine Fluidöffnung (201) der Düse (103) aus einem harten Material besteht, vorzugsweise aus Saphir oder Diamant besteht.

9. Einrichtung (200, 300) nach einem der Ansprüche 1 bis 8, wobei
die Düse (103) eine Fluidöffnung (201) umfasst, die einen Durchmesser zwischen 10-200 µm aufweist, und
der Fluidstrahl (104) der Einrichtung in Verwendung einen Durchmesser zwischen dem 0,64-0,94-Fachen des Durchmessers der Fluidöffnung (201) aufweist.

10. Einrichtung (100) nach einem der Ansprüche 1 bis 9, ferner umfassend
eine Gaszufuhreinheit (205, 210), die dazu ausgelegt ist, ein Gas bereitzustellen, das den Fluidstrahl (104) einhüllt, bevor er durch die Austrittsöffnung (110) ausgegeben wird.

11. Einrichtung (200, 300) nach Anspruch 10, wobei
die Gaszufuhreinheit (205, 210) eine Gaseintrittsöffnung (205), die durch den oberen Teil (107) bereitgestellt ist, und eine Gaszufuhrkammer (210), die durch die hermetische Einhausung (106) umgeben und dazu ausgelegt ist, das Gas dem Fluidstrahl (104) zuzuführen, umfasst.

12. Einrichtung (300) nach einem der Ansprüche 1 bis 11, ferner umfassend
eine Antifluideinheit (301), die dazu ausgelegt ist, zu verhindern, dass sich Fluid an den Außenflächen des unteren Teils (109), insbesondere nahe der Austrittsöffnung (110), ansammelt.

13. Einrichtung (300) nach Anspruch 12, wobei
die Antifluideinheit (301) eine Fluidansaugeinheit umfasst, die dazu ausgelegt ist, Fluid von der Außenfläche des unteren Teils (109) abzusaugen.

14. Einrichtung (300) nach Anspruch 12, wobei
das Antifluidelement (301) ein Kapillarelement umfasst, das dazu ausgelegt ist, Fluid von der Außenfläche des unteren Teils (109) abzutransportieren.

15. Einrichtung (300) nach Anspruch 12, wobei
die Antifluideinheit (301) ein Fluid abstoßendes Material umfasst, das an der Außenfläche des unteren Teils (109) bereitgestellt ist.

16. Einrichtung (300) nach Anspruch 12, wobei
die Antifluideinheit (301) eine Heizeinheit umfasst, die dazu ausgelegt ist, die Außenfläche des unteren Teils (109) zu erwärmen, wodurch Fluid verdampft wird.

17. Verfahren zur Montage einer Einrichtung (100, 200, 300) nach einem der Ansprüche 1 bis 16, wobei das Verfahren Folgendes umfasst
Bereitstellen (401) der Einrichtung (100, 200, 300), wobei der untere Teil (109) von dem oberen Teil (107) entfernt ist,
Vorausrichten (402) des Fluidstrahls (104) mit der Austrittsöffnung (110) in der horizontalen Ebene,
Annähern (403) des oberen Teils (107) und des unteren Teils (109) entlang der vertikalen Richtung, bis der untere Teil (109) an dem oberen Teil (107) mittels der Schnittstelleneinheit (108) angebracht ist, und
präzises koaxiales Ausrichten (404) des Fluidstrahls (104) und der Austrittsöffnung (110).

## Revendications

1. Appareil (100, 200, 300) pour usiner une pièce (101) avec un faisceau laser (102), l'appareil (100, 200, 300) comprenant
une buse (103) destinée à générer un jet de fluide sous pression (104),
au moins un élément optique (105) configuré pour coupler le faisceau laser (102) dans le jet de fluide (104),
une enceinte hermétique (106) entourant la buse (103) et l'au moins un élément optique (105), dans lequel l'enceinte hermétique (106) inclut
une partie supérieure (107) pourvue d'une unité d'interface (108), et
une partie inférieure (109) attachée de façon enlevable à la partie supérieure (107) au moyen de l'unité d'interface (108) et comprenant une ouverture de sortie (110) pour éjecter le jet de fluide (104) vers la pièce (101),
dans lequel l'ouverture de sortie (110) et le jet de fluide (104) sont coaxialement alignés, et
dans lequel l'appareil (100, 200, 300) est **caractérisé en ce que**
l'unité d'interface (108) comprend un élément magnétique, et la partie inférieure (109) est attachée magnétiquement à la partie supérieure (107) au moyen de l'élément magnétique.

2. Appareil (200, 300) selon la revendication 1, dans lequel
une interface hermétique (207) entre la partie supérieure (107) et la partie inférieure (109) est formée par une bague en V en caoutchouc, par contact plaque-plaque graissé, ou par contact plaque-plaque ultraplat.

3. Appareil (100, 200, 300) selon la revendication 1 ou 2, dans lequel
la partie inférieure (109) est facilement enlevable durant l'utilisation en la retirant de la partie supérieure (107).

4. Appareil (100, 200, 300) selon l'une des revendications 1 à 3, dans lequel, lorsque la partie inférieure (109) est enlevée,
la partie inférieure (109) est re-attachable, durant l'utilisation, simplement en la rapprochant de la partie supérieure (109).

5. Appareil (200, 300) selon l'une des revendications 1 à 4, dans lequel
au moins une buse de sortie (208) de la partie inférieure (109) comprenant l'ouverture de sortie (110) est faite d'un matériau dur, de préférence faites de saphir, de carbure de tungstène ou de diamant.

6. Appareil (100, 200, 300) selon l'une des revendications 1 à 5, dans lequel
un diamètre de l'ouverture de sortie (110) est entre 1 et 6 fois, de préférence entre 1 et 3 fois, un diamètre du jet de fluide (104) de l'appareil durant l'utilisation.

7. Appareil (200, 300) selon l'une des revendications 1 à 6, dans lequel
la partie supérieure (107) est pourvue d'un portebuse (202) supportant la buse (103).

8. Appareil (100, 200, 300) selon l'une des revendications 1 à 7, dans lequel
une ouverture de fluide (201) de la buse (103) est faite d'un matériau dur, de préférence faite de saphir ou de diamant.

9. Appareil (200, 300) selon l'une des revendications 1 à 8, dans lequel
la buse (103) comprend une ouverture de fluide (201) ayant un diamètre d'entre 10 et 200 µm, et
le jet de fluide (104) de l'appareil, durant l'utilisation, a un diamètre d'entre 0,64 et 0,94 fois le diamètre de l'ouverture de fluide (201).

10. Appareil (100) selon l'une des revendications 1 à 9, comprenant en outre
une unité d'alimentation en gaz (205, 210) configurée pour fournir un gaz qui enveloppe le jet de fluide (104) avant qu'il soit éjecté à travers l'ouverture de sortie (110).

11. Appareil (200, 300) selon la revendication 10, dans lequel
l'unité d'alimentation en gaz (205, 210) inclut une ouverture d'entrée de gaz (205) prévue à travers la partie supérieure (107) et une chambre d'alimentation en gaz (210) entourée par l'enceinte hermétique (106) et configurée pour fournir le gaz au jet de fluide (104).

12. Appareil (300) selon l'une des revendications 1 à 11, comprenant en outre
une unité anti-fluide (301) configurée pour empêcher qu'un fluide s'accumule sur la surface extérieures de la partie inférieure (109), particulièrement près de l'ouverture de sortie (110).

13. Appareil (300) selon la revendication 12, dans lequel
l'unité anti-fluide (301) comprend une unité d'aspiration de fluide configurée pour aspirer un fluide à partir de la surface extérieure de la partie inférieure (109).

14. Appareil (300) selon la revendication 12, dans lequel
l'unité anti-fluide (301) comprend un élément capillaire configuré pour transporter un fluide à l'opposé de la surface extérieure de la partie inférieure (109).

15. Appareil (300) selon la revendication 12, dans lequel
l'unité anti-fluide (301) comprend un matériau anti-fluide prévu sur la surface extérieure de la partie inférieure (109).

16. Appareil (300) selon la revendication 12, dans lequel
l'unité anti-fluide (301) comprend une unité de chauffage configurée pour chauffer la surface extérieure de la partie inférieure (109), ainsi éliminant le fluide par vaporisation.

17. Procédé d'assemblage d'un appareil (100, 200, 300) selon l'une des revendications 1 à 16, le procédé comprenant
la fourniture (401) de l'appareil (100, 200, 300) avec la partie inférieure (109) enlevée de la partie supérieure (107),
le pré-alignement (402), dans le plan horizontal, du jet de fluide (104) avec l'ouverture de sortie (110),
l'approche (403) de la partie supérieure (107) et de la partie inférieure (109), le long de la direction verticale, jusqu'à ce que la partie inférieure (109) s'attache à la partie supérieure (107) au moyen de l'unité d'interface (108), et
l'alignement coaxial précis (404) du jet de fluide (104) et de l'ouverture de sortie (110).
